# EUROPEAN PATENT SPECIFICATION

(11) **EP 3 578 278 B1**
(45) Date of publication and mention of the grant of the patent: **18.11.2020**
(21) Application number: 19179179.7
(22) Date of filing: 07.06.2019
(51) Int. Cl.: B21D 43/28, B21D 43/00, B65G 25/04

(54) **METHOD AND APPARATUS FOR ORDERLY TRANSFERRING ELEMENTS OF ELONGATED SHAPE**
VERFAHREN UND VORRICHTUNG ZUR GEORDNETEN ÜBERGABE VON LÄNGLICHEN FORMELEMENTEN
PROCÉDÉ ET APPAREIL POUR TRANSFÉRER DANS L'ORDRE DES ÉLÉMENTS DE FORME ALLONGÉE

(30) Priority: 08.06.2018 IT 201800006164
(43) Date of publication of application: 11.12.2019
(73) Proprietor: Schnell S.p.A., 61036 Colli al Metauro PU (IT)
(72) Inventor: RUPOLI, Simone, 61036 Colli al Metauro (PU) (IT)
(74) Representative: Manzella & Associati

(56) References cited:
- EP-A1- 2 374 553
- EP-A2- 1 356 875
- EP-A2- 1 356 876

## Description

### Technical Field

The present invention relates to a method and to an apparatus for orderly transferring elongated elements, in particular metal profiles in bars.

### Prior Art

Apparatuses are known which operate the automatic loading of elongated elements, in particular bars, from a respective store, generally consisting of a plurality of compartments positioned on the ground, inside which the bars are arranged, according to the dimensions and type.

The aforementioned apparatuses are provided with collecting means, for example of the magnetic type, for collecting groups of bars from respective compartments, as well as a transferring device, for loading the collected bars, associated with a counting and untangling means, so as to transfer a given number of bars to appropriate receiving means. More precisely, the aforementioned receiving means are intended to receive the counted and untangled bars and to transfer them to following processing stations, for example cutting and/or bending stations through a supply path, generally of the roller type.

An example of such apparatus is illustrated in the patent EP 1356875 of the same Applicant. More precisely, the apparatus illustrated in the patent comprises a transferring device arranged above a collecting magazine, comprising a body shaping a shelf, tiltable between a substantially horizontal position and a substantially vertical, lowered position, adapted to clear the passage of the bars during their loading and unloading activity.

In particular, the body of the transferring device shapes a screw-type member, thus provided with a helical recess on the lateral surface, intended to receive the bars to be counted, and, following the rotation of the body around its own longitudinal axis, to separate them and transfer them transversely to the longitudinal development of the same bars.

Furthermore, the patent EP 1356876 of the same Applicant illustrates an apparatus for the automatic loading of metal profiles in bars, in which a transferring device of the loaded metal sections is provided, associated with means for separating and means for counting the bars, as well as auxiliary support means arranged laterally to the aforementioned transferring device and gradually operated along the longitudinal axis of the metal profiles.

A problem complained in the specific sector lies in the following transfer of the metal profiles, preferably separated and previously counted according to the desired number, then untangled and preordained, to a supply path arranged on the side of or below the device itself and upstream of a next processing station.

In the apparatuses of the known type, the transfer takes place by gravity, simply by tilting or removing the transferring device on which the metal profiles are arranged in an orderly manner, near to the supply path, thus producing by fall the uncontrolled, i.e. disordered transfer of the elements on the supply path.

This transferring manner exposes the profiles to undesirable stress, which furthermore compromise the ordering. More precisely, the metal profiles, by virtue of their own flexibility, can become tangled again during the transfer, complicating following processing. For example, further ordering operations, in particular aimed at untangling once again the metal profiles, or butt-jointing operations may be necessary.

Moreover, the transferring operation thus carried out is a source of considerable noise, beyond the maximum levels allowed in the workplace. It should also be considered that in the case of elements, in particular metal bars, of reduced length, there is a high risk that these elements bounce following the transferring step and come out of the supply path, with an imaginable risk for the present operators. In any case, these circumstances require the machine to be shut down for the intervention of operators and restoring the working conditions manually.

### Disclosure

The object of the present invention is to solve the abovementioned problems, devising a method and an apparatus for orderly transferring elongated elements, in particular metal profiles in bars, which allows the transfer operations to be carried out in an orderly manner.

Within this aim, it is a further object of the present invention to provide an apparatus of simple constructive and functional design, provided with a safe and reliable use, as well as a relatively inexpensive cost.

The aforementioned objects are achieved, according to the present invention, by the method for orderly transferring elongated elements according to claims 1 and 8 and by the apparatus according to claims 9 and 13.

The method according to the invention provides for preparing a receiving device, adapted to receive a determined number of elongated elements, by means of one or more receiving arms, at a receiving level, and a supply path comprising a plurality of transport members defining a supply plane arranged at a supply level, cooperating with a transfer assembly, to transfer orderly a determined number of elements from the aforesaid receiving level to the supply level itself.

In particular, the method provides for actuating the receiving device according to a stroke of approach to said supply path to prepare the aforementioned one or more receiving arms aligned above the transport members.

The method further provides for actuating the aforementioned transferring assembly in a discharge stroke, in particular according to a vertical translation stroke, from the aforementioned receiving level, to a disengaging level, lower than the supply level, to transfer the elements received from the receiving device to the supply path.

According to a prerogative of the invention, one or more supporting members defining the transferring assembly are arranged staggered, along a transport direction of the supply path, compared with the transport members of the supply path, to allow the aforesaid discharge stroke and avoid mutual interference.

Preferably, the aforesaid discharge stroke is a substantially vertical translation stroke, by which the support members of the transferring assembly are movable from the receiving level to the disengaging level, at which they are retractably arranged compared with the transport members, preferably rollers, of the supply path.

Preferably the method provides for actuating the transferring assembly, intercepting spaced portions of the aforementioned elements by means of the support members.

The transferring assembly can be integrated into the aforementioned receiving device, the receiving arms coinciding with the aforementioned support members.

Alternatively, the aforementioned transferring assembly can be integrated into the supply path. The method in particular may provide, prior to the aforesaid discharge stroke, for operating the transferring assembly according to a load stroke, bringing the aforementioned support members from the disengaging level to a raised level with respect to the aforementioned receiving level, said support members being positioned staggered to the aforesaid receiving arms along the aforesaid transport direction, so as to lift the elements from the receiving arms of the receiving device. Furthermore, the method provides for actuating the receiving arms in a withdrawing stroke from the support members, so as to free the space below the support members positioned at the aforementioned raised level and allow the supporting members to perform the aforesaid discharge stroke.

Preferably, the aforesaid withdrawing stroke of the support members takes place through a movement of translation of the receiving arms along a substantially horizontal direction.

The resulting transferring movement, of only lowering or raising and lowering, carried out by the transferring assembly, is therefore advantageous because it structurally simplifies the apparatus that implements the method, in particular, the activating members. Alternatively, it is possible to provide an elevator motion of a different type, for example made according to an inclined trajectory with respect to the vertical direction, with a circumferential arc or a combination of the respective motions.

Thanks to the interaction between the receiving device and the transferring assembly, a specific number of elements, arranged in an orderly manner on the receiving device itself, can be transferred in an efficient and rapid manner, similarly ordered, to the supply path.

Thanks to the discharge stroke, possibly preceded by the load stroke, following which the aforementioned elements are gradually loaded by the transferring assembly, the ordered positioning of the elements is preserved from the risk of entangling which, instead, arises in the type of known apparatuses, following unloading by simple gravity from a plane at a higher level to a plane at a lower level, where the supply path is located.

According to a particular aspect of the invention, it is possible to provide that above the supply path and the respective supply plane an accumulation assembly is provided, configured to define an accumulation plane. In this case, the transferring assembly can carry out the transfer on the accumulation plane, arranged, in particular, at an intermediate level between the aforesaid receiving plane and the supply plane of the supply path. The aforementioned accumulation plane, preferably aligned above the supply plane, is used to temporarily accumulate the elements to be fed to the processing machine, waiting for the supply path to be freed from further elements during the feeding step to the downstream processing machine.

In this case, the accumulation plane is preferably defined by a plurality of auxiliary support members, for example made up of shelfs or arms carried by suitable supports, interposed between the conveyor members of the supply path and adapted to support the elongated elements at the aforementioned intermediate level.

The auxiliary support members are advantageously movable between the intermediate level and the disengaging level, according to a further unloading stroke, to transfer the received elements to the supply path and a load stroke to prepare for a new reception.

In particular, the aforementioned auxiliary support members are further tiltable around a vertical axis lateral to the supply route, so as to avoid interference with the elements transferred to the supply path, during the aforementioned load stroke, when returning to the intermediate level. More precisely, following an oscillation stroke from an arrangement transverse to the supply path to a parallel arrangement, on the side of the supply path, the auxiliary support members can be actuated again at the intermediate level and then rotated in the transverse arrangement to the supply path, in order to receive further elements to be transferred.

The method according to the invention and the apparatus that implements it, therefore, reduce the times required for the transfer operations and the stresses on the actuating members involved, since the transfer of the elements from one device to the other, up to the supply path, takes place through a gradual taking over of the weight of the elements to be unloaded on the supply path, following the substantially vertical motion of the transferring assembly.

### Brief description of drawings

The details of the invention will be more evident in the detailed description of a preferred embodiment of the apparatus adapted to implement the method for orderly transferring elongated elements, illustrated only by way of example in the accompanying drawings, where:
Figure 1 shows a perspective view of the apparatus according to the invention;
Figures 2 to 7 show a side view of the apparatus according to the invention in successive operating steps for transferring elongated elements;
Figures 8 to 12 show a side view of a portion of the same apparatus, in successive operating steps;
Figures 13 to 16 respectively show a side view of the apparatus according to the invention in a different embodiment, in successive operating steps of transferring elongated elements;
Figures 17 to 20 respectively show a side view of the apparatus according to the invention in a further embodiment, in successive operating steps for transferring elongated elements.

### Best mode

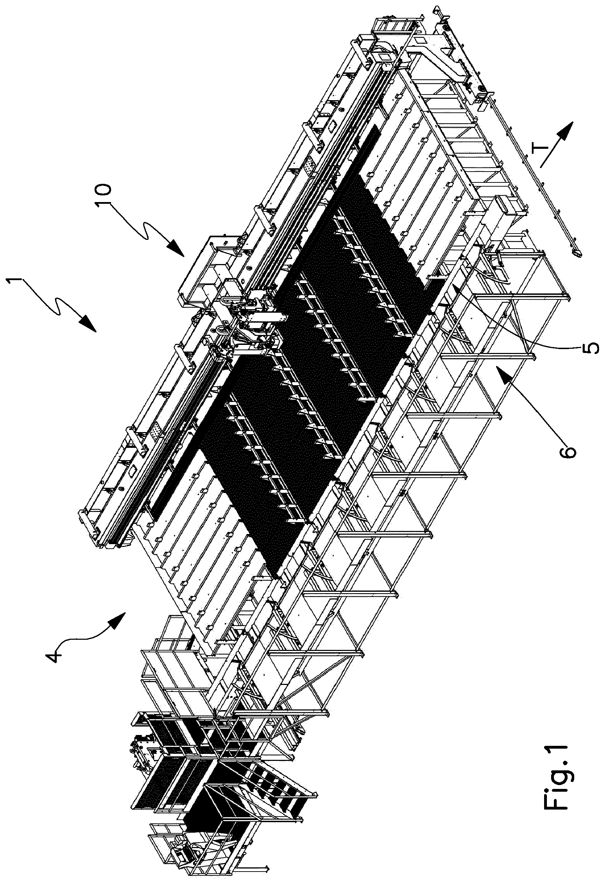

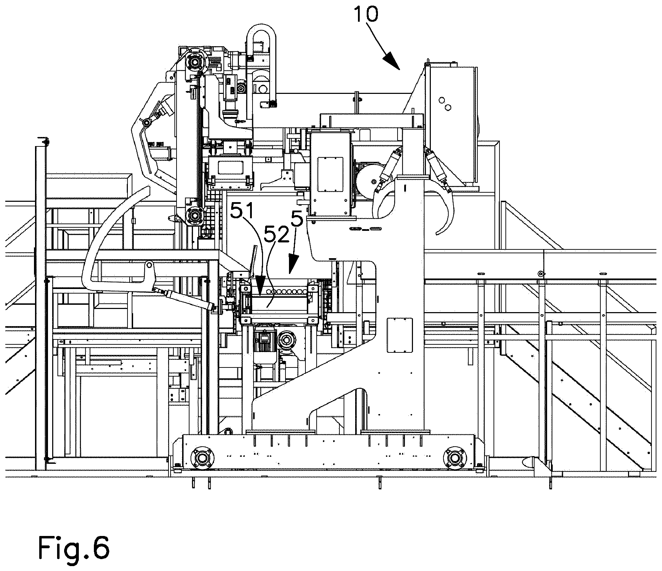

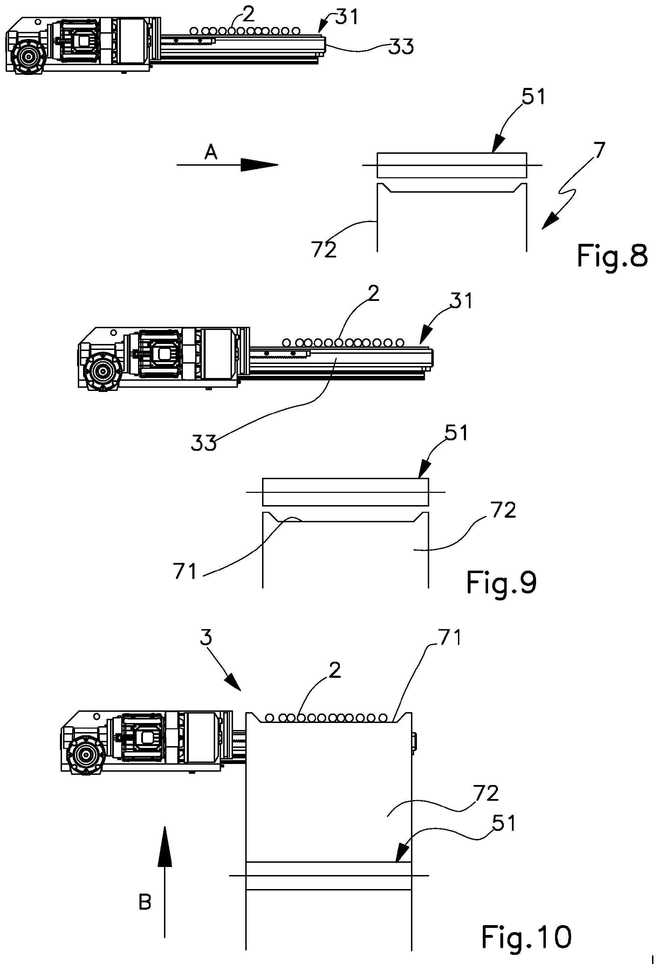

With particular reference to figures 1 to 12, the apparatus according to the invention is indicated as 1, for orderly transferring elongated elements 2, in particular metal profiles in bars.

Certainly, the apparatus 1 is indicated for feeding any elongated element, even different from the metal profiles.

The apparatus 1 comprises a loading assembly 10 equipped, in a known way, with a plurality of cooperating assemblies, configured for collecting elements 2 from a collection area or ironworks, in general from a store 4, for counting a determined number of them, for separating from exceeding elements the aforesaid determined number and, finally, for ordered positioning of them to be transferred to the following processing, for example cutting and/or bending.

In particular, the loading assembly 10 comprises, in addition to a gripping device 11 and a transversal transferring device 12, for example, but not limited to it, of the type described by the patent EP 1356875, a receiving device 3 intended to receive one or several elements 2, preferably the aforesaid predetermined number of elements 2, taken from a store 4, to transfer them to a supply path 5, for transport along a coaxial transport direction T to the aforesaid elements 2 transported, to the aforesaid following processing operations.

The apparatus 1 may further comprise, in some cases, an auxiliary store 6, opposite to the store 4, with respect to the supply path 5, for the manual transfer of the elements 2 to the supply path 5.

In particular, the gripping device 11 can comprise, for example, a magnetic, electromagnetic or pincer member, adapted to take one or more elements 2, preferably a plurality of elements 2, according to a number generally not known a priori, from the store 4 so as to deliver them to the transverse transferring device 12. The store 4 of elements 2 can comprise one or more compartments, preferably a series of compartments, wherein the elements 2 are arranged, preferably divided according to the transverse and/or longitudinal dimensions, as well as for example the material and the shape.

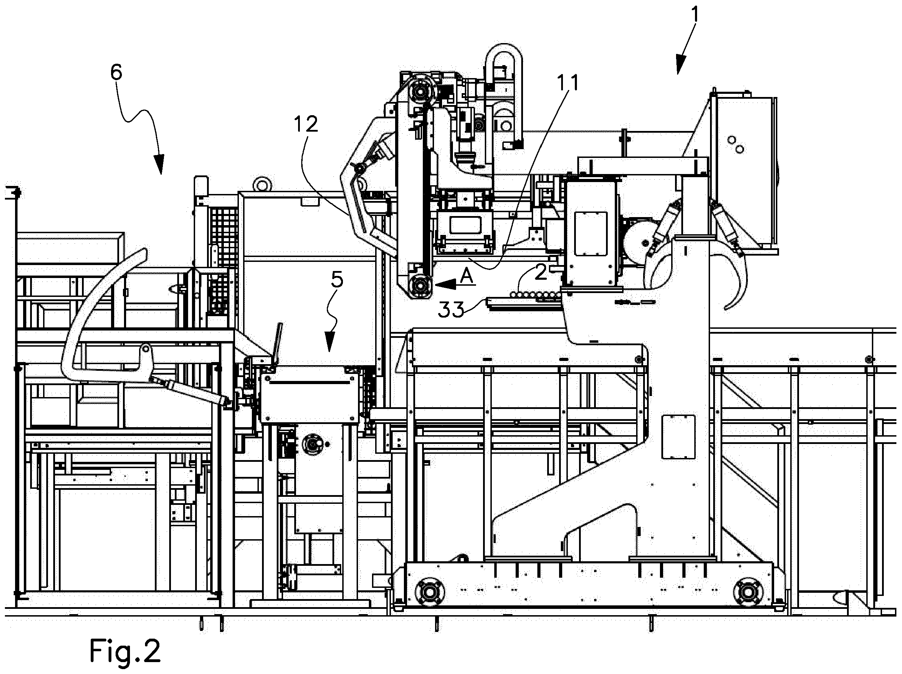

The receiving device 3 defines a receiving plane 31 of the elements 2. For example, the aforementioned receiving device 3 is made up of one or more receiving arms 33 mounted cantilever on a frame 32 (see in particular Figure 2).

In particular, the load assembly 10 may comprise further means, for example auxiliary receiving means, acting along the longitudinal axis of the elements 2, cooperating with the aforementioned transferring device 12 and/or with the receiving device 3, to order, in particular untangle, the elements 2 intended to be transferred from the receiving plane 31 to the supply path 5.

The receiving device 3 is therefore configured to receive elements 2 according to a given number, lying on a single layer, then ordered, standing on the receiving plane 31.

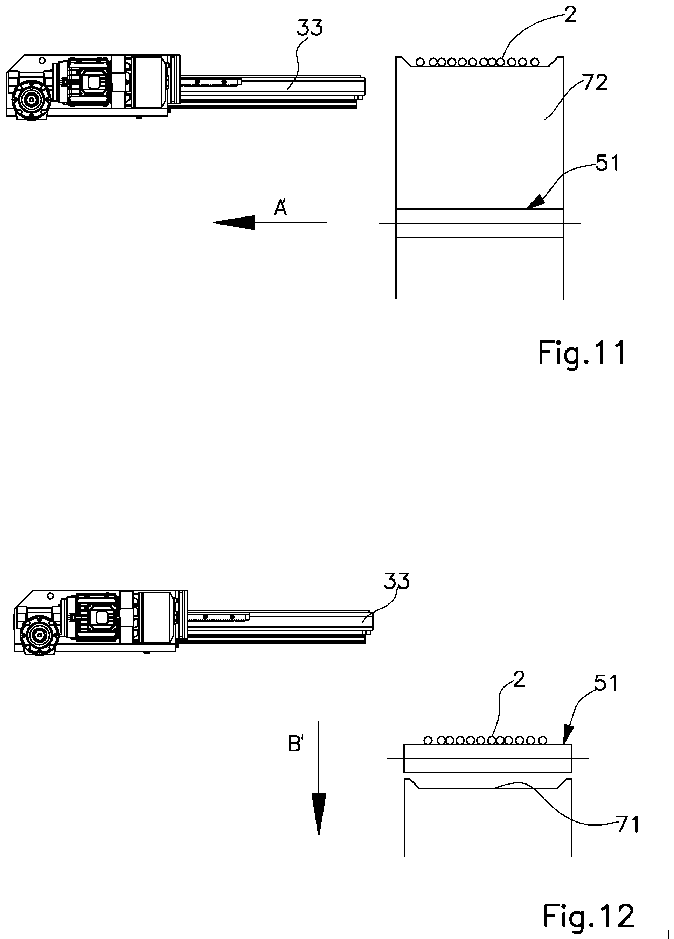

Moreover, the receiving device 3 is movable, according to an approaching stroke A and respectively a withdrawing stroke A '(Fig. 11), alternatively between a receiving position, suitable for interaction with the supply path 5, for taking charge of the elements 2 by the supply path 5, as described below, and a separated position of disengagement, suitable for disengaging the unloading area to the supply path 5.

For example, the aforementioned approaching and/or withdrawing stroke is a travel of translation of the receiving device 3 between the receiving position, advanced along a direction transversal to the supply path 5, and therefore to the elements 2 intended for being transported along it, and the disengaging position, set back in the same transverse direction, at which, in particular, the reception device 3 moves away from the elements 2 destined to be engaged by the supply route 5.

Alternatively, the approaching and withdrawing motion of the receiving device 3, in particular of the receiving arms 33, may be of a different type, for example of rotation or of rotary-translation, as long as it is fit for the purpose.

The supply path 5, which defines a supply plane 51, is preferably made by means of a succession of transport rollers 52, aligned parallel along the aforementioned transport direction T, longitudinal to the elements 2 to be transferred.

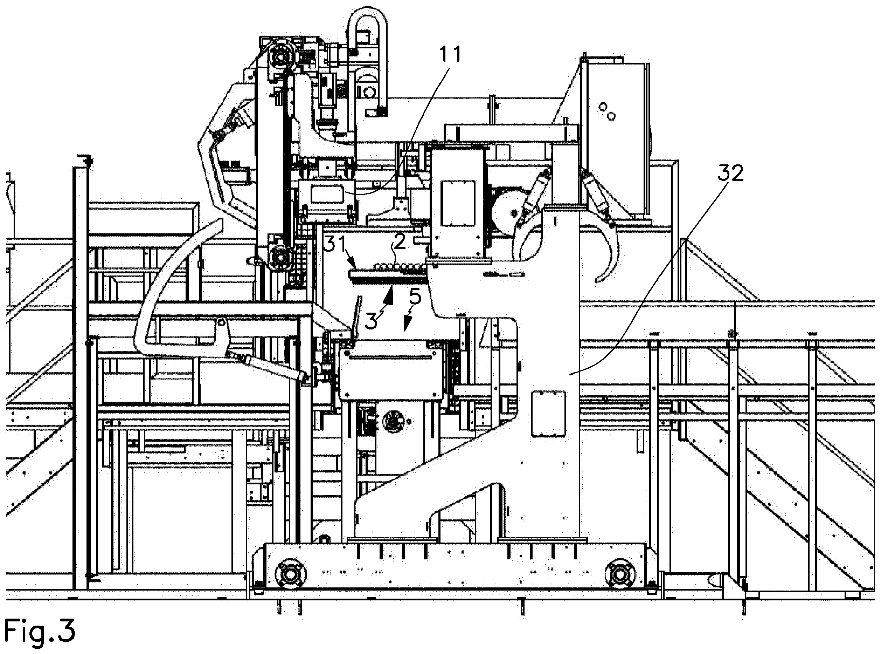

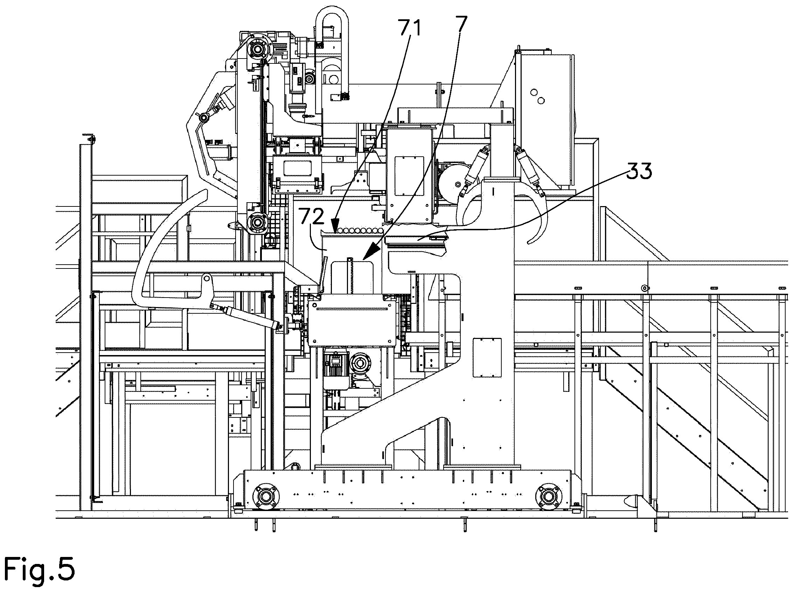

A transfer assembly 7 is provided according to the invention, cooperating with the receiving device 3 and with the supply path 5, configured to transfer the elements 2 from the receiving plane 31 of the receiving device 3 to the supply plane 51 of the supply path 5 (see in particular figures 3 and 5).

In particular, the transferring assembly 7 is configured to transfer the elements 2 from a receiving level, corresponding to the receiving plane 31, to a lower supply level, corresponding to the supply plane 51.

The transferring assembly 7 therefore defines a supporting plane 71 for the elements 2, preferably flat, or for example slightly concave, substantially parallel to the supply plane 51 of the supply path 5.

The transferring assembly 7 is preferably made by means of a plurality of supporting members 72, for example arms, interposed between the transport members 52, preferably rollers, of the supply path 5, movable according to a loading stroke B and to a discharge stroke B', alternatively between a level of disengagement which disappears below the supply plane 51 of the supply path 5, and a level raised with respect to the receiving level, at which the supporting plane 71 of the supporting members 72 is raised with respect to the receiving arms 33 of the receiving device 3, thus taking in charge the elements 2 to be transferred.

The support members 72 are preferably made by means of special frames bearing arms cooperating to define the aforementioned supporting plane 71, preferably interposed with the members, for example the rollers, which make up the supply path 5, as well as with the receiving arms 33 of the receiving device 3.

The supporting members 72, in particular the aforementioned supporting arms, are preferably arranged spaced along the supply path 5, so as to engage, with respective operating surfaces, respective distal portions of the elements 2 to be transferred. Substantially, the operative surfaces of the supporting members 72 define an effective area, even if discontinuous, for the secure support of the elements 2 to be transferred.

The support members 72 are also operable in movement according to the aforesaid loading stroke B and discharge stroke B', in particular for lifting and lowering, by means of at least one motor member, for example housed inside the frame carrying the supply path 5.

The aforementioned transferring motion may be preferably a translational motion, in particular in a vertical direction.

More precisely, this transfer motion may be then alternatively a lifting B, for collecting the elements 2 from the receiving plane 31 until they are supported at the raised level by the support plane 71, and descending B', for releasing of the same collected elements 2 on the supply plane 51 of the supply path 5.

More precisely, the descending motion B' of the support members 72 takes place in a suitable step relation relative to the withdrawing motion A' from the supply path 5, of the receiving device 3, therefore, for example, after the receiving arms 33 have been retracted or otherwise moved away anyway, freeing the passage for the unloading stroke B' of the support members 72.

Alternatively, the aforementioned transferring motion may be of a different type, provided that it is adapted to collect the elements 2 from the receiving plane 31 and releasing the same elements 2 on the supply plane 51.

The operation of the apparatus for orderly transferring elongated elements according to the invention is evident from the above description.

In an initial preparatory step the loading assembly 10 collects a generally indeterminate number of elements 2 from the store 4, counts them, separate them from an excess number to a specified number, operates the untangling and the ordered positioning on the receiving plane 31 of the receiving device 3.

Preferably, the loading assembly 10 is operated in motion towards the supply path 5, so as to bring the receiving device 3 at the supply path 5 (see Figure 2).

In this circumstance, in particular, the arms 33 of the receiving plane 31 are aligned above the transport members 52 of the supply plane 51 of the supply path 5 (see Figure 3), while the support members 72 defining the supporting surface 71 are arranged at the disengaging level, below the supply plane 51 itself.

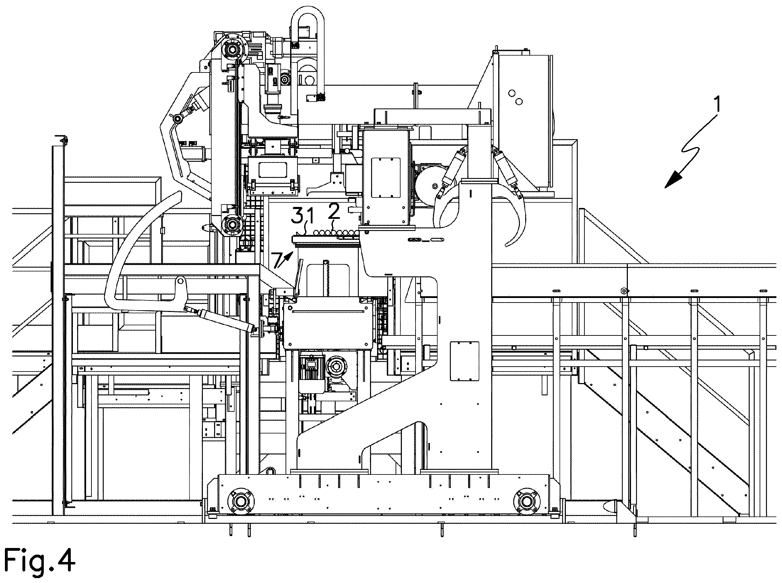

The support members 72 of the transferring assembly 7 are therefore operated according to the aforementioned loading stroke B from the disengaging level to the receiving level, at which they reach the receiving plane 31, intercepting respective distal portions of the preferably ordered elements 2 (see figure 4).

The supporting members 72 may be further moved, in particular raised to the raised level, to gradually take in charge the weight of the elements 2 involved and, at the same time, free the receiving device 3 from the same weight.

Subsequently the receiving device 3 is moved according to the aforementioned withdrawing motion A' or disengagement, to free the passage to the transferring assembly 7.

In particular, the receiving arms 33 are moved according to the disengaging motion from the advanced receiving position to the disengaging position, set back in a direction such as horizontal, to free the unloading area of the elements 2 from the supply path 5 (see figure 5).

The supporting members 72 can then be operated in the discharging, in particular lowering, stroke B', to the aforementioned disengaging level, so as to orderly discharge the elements 2 onto the supply plane 51 of the supply path 5 (see figure 5). During this discharging stroke B' the supporting members 72 pass through respective spaces existing between adjacent transport members 52 along the supply path 5.

More precisely, the operating means for supporting the supply path 5, in particular the rollers, if provided, are now loaded with the elements 2 which lie on them in an orderly manner and without overlaps. In this configuration the same elements 2 may be easily directed in abutment of a suitable fixed abutment member, to align the end portions thereof.

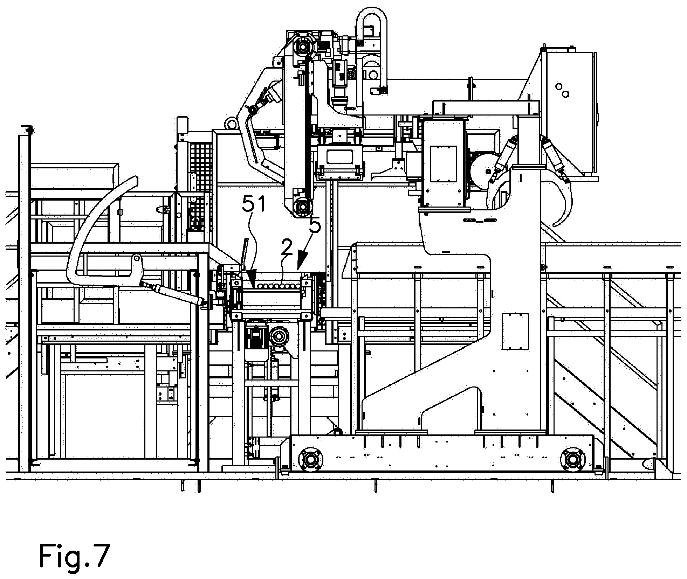

The apparatus 1, after the elements 2 have been deposited in an orderly manner on the supply line 5, is then ready to start a new cycle of loading and orderly transferring, possibly arranging it also at a new compartment of the store 4, to perform again the steps described above (see Figure 7). At the same time, the supply path 5 may, for example, carry out a cutting cycle of the elements 2 transferred in an orderly manner.

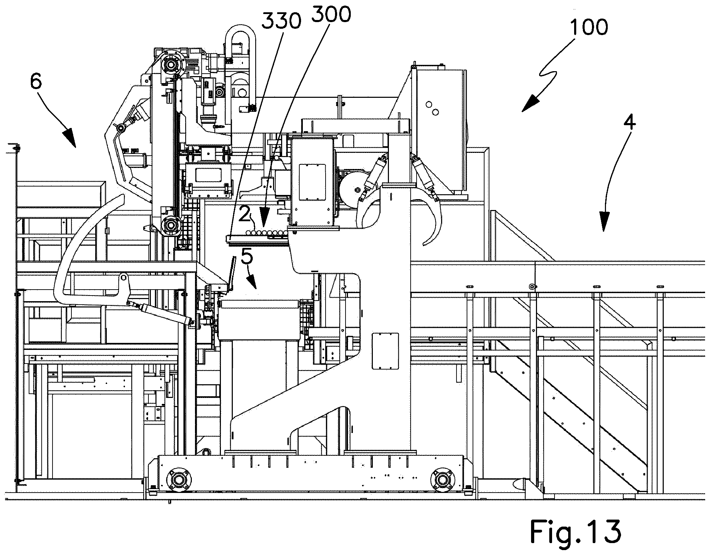

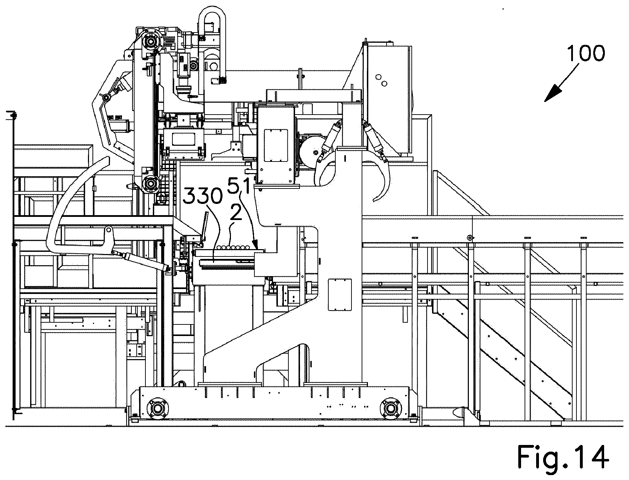

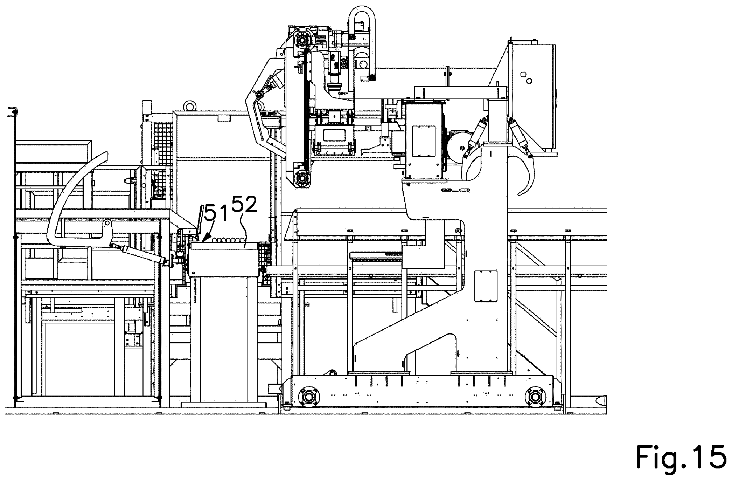

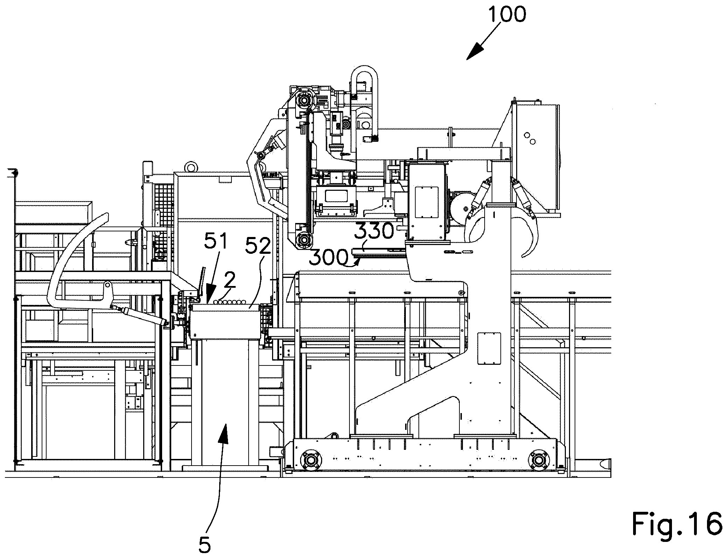

According to a different embodiment illustrated in Figures 13 to 16, for the remainder functionally similar to the embodiment described above, the transferring assembly is integrated in the receiving device 300. More precisely, the receiving arms 330 are movable, in addition to the approaching stroke A and the withdrawing stroke A', also by the discharging stroke B', and by the returning stroke B to the receiving level.

In practice, the receiving arms 330 of the receiving device 300 may be actuated by the transferring motion, in particular the descending motion, interposing them with the transport members 52 of the supply path 5, to directly deliver the elements 2 received by the transversal transferring device 12 to the transport members 52 of the supply path 5.

The aforementioned arms 330 are therefore preferably provided with a discharging and loading motion along a substantially vertical direction or according to a different, even non-linear trajectory.

The method according to the invention, and the apparatus that implements the same method, therefore enable the transfer of elongated elements to the supply path to be carried out efficiently and in an orderly manner for transporting to the following processing steps.

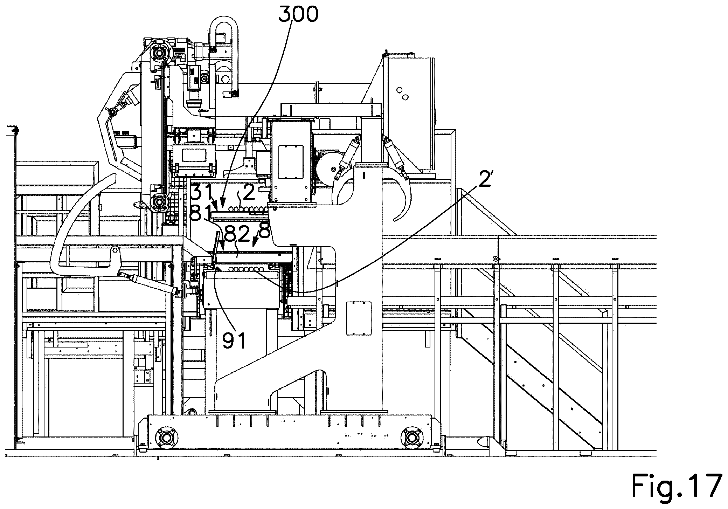

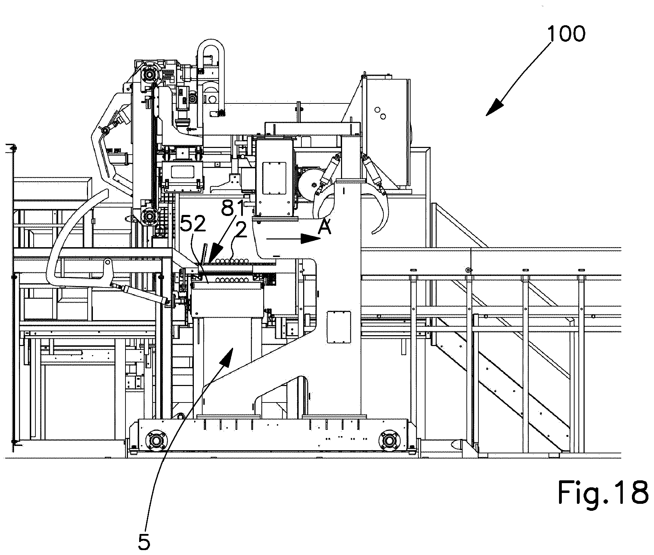

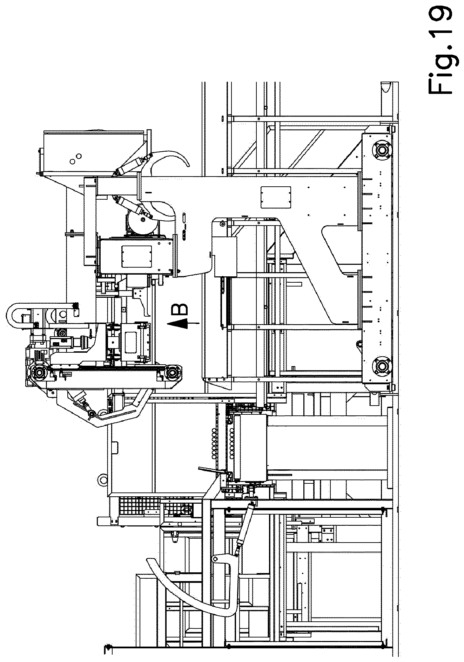

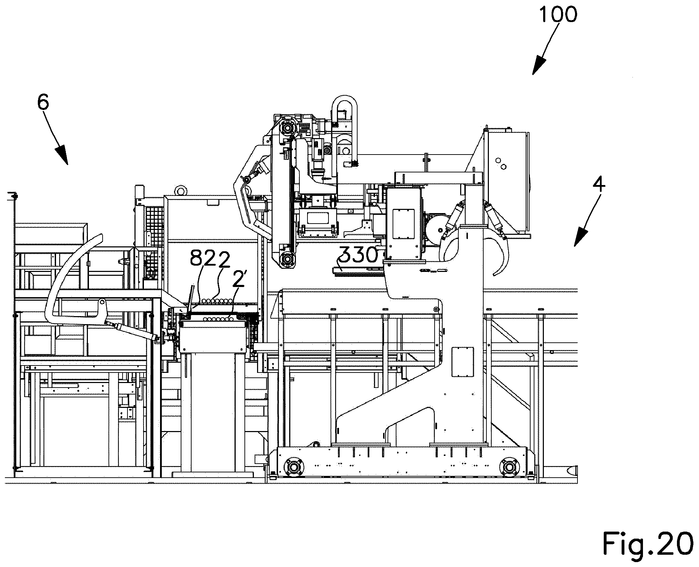

According to a further embodiment illustrated in figures 17 to 20, it is possible to provide that above the supply path 5 and the respective supply plane 51 an accumulation assembly 8 is provided, configured to define an accumulation plane 81. In this case, the transferring assembly, in particular in the case it is integrated with the receiving assembly 300, may transfer on the accumulation plane 81, arranged, in particular, at an intermediate level between the aforesaid receiving plane 31 and the supply plane 51 of the supply route 5. The aforesaid accumulation plane 81, preferably aligned above the supply plane 51, is used for temporarily accumulating the elements 2 to be fed to the processing machine, waiting for the supply path 5 to be freed from further elements 2' arranged thereon and in the process of being fed to the processing machine downstream.

In this case, the accumulation plane 81 is preferably defined by a plurality of auxiliary support members 82, for example made up of shelves or arms carried by special supports, interposed between the transport members 52 of the supply path and adapted to support the elongated elements 2 at the aforementioned intermediate level.

The auxiliary support members 82 are advantageously movable between the intermediate level and the disengaging level, according to a discharging stroke B', to transfer the received elements 2 to the supply path 5 and a loading stroke B to prepare them for a new reception.

In particular, the aforementioned auxiliary support members 82 may be further oscillated about a vertical lateral axis to the supply path 5, so as to avoid interference with the elements 2 transferred to the supply path 5, during the aforementioned loading stroke B, returning to the intermediate level. More precisely, following an oscillating stroke from a transverse arrangement to the supply path 5 to a parallel arrangement, to the side of the supply path 5, the auxiliary support members 82 may be operated again on the intermediate level and subsequently rotated in the arrangement transversal to the supply path 5, so as to receive further elements 2 to be transferred.

The presence of the accumulation assembly 8 therefore makes it possible to free the receiving device 300 from the received elements 2, even when the supply path 5 is engaged.

In particular, the discharging stroke B' of the receiving device 300 stops between the aforesaid intermediate level and the transport members 52 of the supply path 5, to discharge the elements 2 onto the accumulation assembly 8. The withdrawing motion A' occurs in a similar way, to disengage the unloading area.

Instead, in the case in which the transfer assembly 7 is integrated in the supply path 5, it is however possible to provide for the accumulation assembly 8.

In this case, however, the support members 72 are provided with an oscillating motion, as described above, in order to be able to carry out the loading, thus rising, stroke B, without interfering with the elements 2 discharged on the accumulation plane 81.

In any case, either in the case that the transfer assembly 7 is integrated in the receiving device 300, or in the case that the transfer assembly 7 is integrated in the supply path 5, the accumulation assembly 8 discharges the elements 2 on the supply path 5, when the latter is disengaged, simply by actuating the auxiliary support members 82 by a discharging or lowering motion from the intermediate level to the disengaging level.

In the practical embodiment of the invention, the used materials, as well as the shape and the dimensions, may vary depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. Method for orderly transferring elongated elements, in particular metal bars, comprising the steps of:
(a). arranging a receiving device (3, 300), movable transversely to a store (4) for collecting said elements (2) and comprising one or more receiving arms (33, 330) defining a receiving plane (31) positioned at a receiving level, said elongated elements (2) being arranged standing on said receiving plane (31);
(b) arranging a supply path (5) comprising a plurality of transport members (52), configured to receive in support and to transport said elongated elements (2) in a transport direction (T) along the longitudinal axis of said elements (2), said transport members (52) defining a respective supply plane (51) at a supply level lower than said receiving level, said method being **characterised in that** it comprises the further steps of:
(c). arranging a transfer assembly (7) cooperating with said receiving device (3, 300) and with said supply path (5), comprising a plurality of supporting members (330, 72) cooperating to define a support plane (71)) for said elements (2), configured to be movable in a discharging stroke (B') at least between said receiving level and a disengagement level, lower than said supply level, said support members (330, 72) being staggered along said transport direction (T) with respect to said transport members (52) of said supply path (5);
(d). actuating said receiving device (3, 300) according to an approaching stroke (A) to said supply path (5) in order to prepare said one or more receiving arms (33, 330) aligned above said transport members (52);
(e). arranging said support members (330, 72) of said transferring assembly (7) in said receiving level, so as to support said elements (2) arranged on said receiving plane (31);
(f). actuating said transferring assembly (7, 300) according to said unloading stroke (B') from said receiving level to said disengagement level, to release in an orderly manner said elements (2) on said supply plane (51) of said supply path (5).

2. Method according to claim 1, **characterised in that** said step of (e). actuating said transferring assembly (7) takes place by intercepting spaced portions of said elements (2) by means of said support members (330, 72).

3. Method according to claim 1 or 2, **characterised in that** said unloading stroke (B') is a substantially vertical translation stroke.

4. Method according to one of the preceding claims, **characterised in that** said transferring assembly (7) is integrated in said receiving device (300), said receiving arms (330) coinciding with said support members.

5. Method according to one of claims 1 to 3, **characterised in that** said step of (f). operating said transfer assembly (7) according to said unloading stroke (B') is preceded by the steps of:
(e1). actuating said transferring assembly (7) according to a loading stroke (B), bringing said support members (72) from said disengagement level to a raised level compared to said receiving level, said support members (72) being positioned staggered to said receiving arms (33) along said transport direction (T), so as to lift said elements (2) from said receiving arms (33) of said receiving device (3);
(e2). actuating said receiving arms (33) in a stroke (A') of withdrawing from said support members (72), so as to free the space below said support members (72) positioned at said raised level and enable said support members (72) to carry out said discharging stroke (B').

6. Method according to claim 5, **characterised in that** said stroke (A') of withdrawing from said support members (72) takes place through a translational motion of said receiving arms (33) along a substantially horizontal direction.

7. Method for orderly transferring elongated elements, in particular metal bars, comprising the steps of:
(a). arranging a receiving device (3, 300), movable transversely to a store (4) for collecting said elements (2) and comprising one or more receiving arms (33, 330) defining a receiving plane (31) positioned at a receiving level, said elongated elements (2) being arranged standing on said receiving plane (31);
(b) arranging a supply path (5) comprising a plurality of transport members (52), configured to receive in support and to transport said elongated elements (2) in a transport direction (T) along the longitudinal axis of said elements (2), said transport members (52) defining a respective supply plane (51) at a supply level lower than said receiving level, said method being **characterised in that** it comprises the further steps of
(c). arranging a transferring assembly (7) cooperating with said receiving device (3, 300) and with said supply path (5), comprising a plurality of supporting members (330, 72) cooperating to define a support plane (71)) for said elements (2), configured to be movable in a discharging stroke (B') at least between said receiving level, and a disengagement level, lower than said supply level and/or an intermediate level at which an intermediate accumulation plane (81) is defined, said support members (330, 72) being staggered along said transport direction (T) with respect to said transport members (52) of said supply path (5) and/or to auxiliary support members (82) arranged above said supply path (5) and defining said accumulation plane (81);
(d). actuating said receiving device (3, 300) according to a stroke (A) approaching to said supply path (5) to arrange said one or more receiving arms (33, 330) aligned above said transport members (52) and/or to said auxiliary support members (82);
(e). arranging said support members (330, 72) of said transferring assembly (7) in said receiving level, so as to support said elements (2) arranged on said receiving plane (31);
(f). actuating said transferring assembly (7, 300) according to said unloading stroke (B') from said receiving level to said disengagement level, to release in an orderly manner said elements (2) on said supply plane (51) of said supply path (5) or on said accumulation plane (81).

8. Method according to claim 7, **characterised in that** it comprises the further step of actuating said auxiliary support members (82) in a further stroke of unloading from said intermediate level to said supply level, to transfer said elements (2) released on said accumulation plane (81) to said supply path (5).

9. Apparatus for orderly transferring elongated elements, comprising a receiving device (3) comprising one or more receiving arms (33, 330) defining a receiving plane (31) positioned at a receiving level and configured to receive said elements (2), a supply path (5) comprising a plurality of transport members (52), configured to receive in support and to transport said elements (2) in a transport direction (T) along the longitudinal axis of said elements (2), said transport members (52) defining a respective supply plane (51) at a supply level lower than said receiving level, said receiving device (3) being movable by a stroke (A) of approaching to said supply path (5) to align said one or more receiving arms (33, 330) above said support members (52), **characterised in that** it comprises a transferring assembly (7, 300) cooperating with said receiving device (3, 300) and with said supply path (5), comprising one or more supporting members (330, 72) cooperating to define a support plane (71) for said elements (2), configured to be movable in a discharging stroke (B') at least between said receiving level and a disengagement level, lower than said supply level, said one or more support members (330, 72) being staggered along said conveying direction (T) with respect to said transport means (52) of said supply path (5), to release said elements (2) on said supply plane (51) of said supply path (5) following the said discharging stroke (B').

10. Apparatus according to claim 9, **characterised in that** said supply path (5) is defined by transport members (52), in particular rollers, mutually spaced, said one or more supporting members (72, 330) being interposable between said transport members (52) in said discharging stroke (B') towards said disengagement level.

11. Apparatus according to claim 10, **characterised in that** said support members (72) are made by means of movable arms, mounted movable along said supply path (5), so as to engage, during said unloading stroke (B'), respective distal portions of said elements (2) to be transferred.

12. Apparatus according to claim 9, **characterised in that** said transferring assembly (7) is integrated with said receiving device (300), said one or more movable support members according to said unloading stroke (B') being made by said one or more receiving arms (330).

13. Apparatus for orderly transferring elongated elements, comprising a receiving device (3) comprising one or more receiving arms (33, 330) defining a receiving plane (31) positioned at a receiving level and configured to receive said elements (2), a supply path (5) comprising a plurality of transport members (52), configured to receive in support and to transport said elements (2) in a transport direction (T) along the longitudinal axis of said elements (2), said transport members (52) defining a respective supply plane (51) at a supply level lower than said receiving level, said receiving device (3) being movable by a stroke (A) of approaching to said supply path (5), **characterised in that** it comprises a transferring assembly (7, 300) cooperating with said receiving device (3, 300), with said supply path (5) and/or with an accumulation assembly (8) comprising a plurality of auxiliary support members (82) defining an accumulation plane (81) for said elements (2), arranged at an intermediate level between said receiving level and said supply level, said transferring assembly (7) comprising one or more supporting members (330, 72) cooperating to define a support plane (71) for said elements (2), configured to be movable in a discharging stroke (B') at least between said receiving level, and a disengagement level, lower than said supply level and/or said intermediate level, said one or more support members (330, 72) being staggered along said transport direction (T) with respect to said transport members (52) of said supply path (5) and/or to said auxiliary support members (82), to release said elements (2) on said supply plane (51) of said supply path (5) following said unloading stroke (B') or on said accumulation plane (81), when said one or more receiving arms (33, 330) are aligned above said support members (52) following said approaching stroke (A).

14. Apparatus according to one of claims 9 to 13, **characterised in that** said unloading stroke (B') is a substantially vertical translation stroke.

## Patentansprüche

1. Verfahren zum korrekten Übergeben von länglichen Elementen, insbesondere Metallstäben, dass die folgenden Schritte umfasst:
(a). Anordnen einer Aufnahmevorrichtung (3, 300), die quer zu einem Lager (4) bewegbar ist, zum Sammeln der Elemente (2) und die einen oder mehrere Aufnahmearme (33, 330) umfasst, die eine Aufnahmeebene (31) definieren, die auf einem Aufnahmeniveau positioniert ist, wobei die länglichen Elemente (2) stehend auf der Aufnahmeebene (31) angeordnet sind;
(b). Anordnen eines Zuführungspfads (5), der eine Vielzahl von Transportkomponenten (52) umfasst, die dazu ausgelegt sind, die länglichen Elemente (2) gestützt aufzunehmen und in eine Transportrichtung (T) entlang der Längsachse der Elemente (2) zu transportieren, wobei die Transportkomponenten (52) eine jeweilige Zuführungsebene (51) auf einem Zuführungsniveau definieren, das tiefer ist als das Aufnahmeniveau, wobei das Verfahren **dadurch gekennzeichnet ist, dass** es die weiteren folgenden Schritte umfasst:
(c). Anordnen einer Übergabeanordnung (7), die mit der Aufnahmevorrichtung (3, 300) und mit dem Zuführungspfad (5) zusammenwirkt und eine Vielzahl von Stützkomponenten (330, 72) umfasst, die zusammenwirken, um eine Stützebene (71) für die Elemente (2) zu definieren, und dazu ausgelegt sind, mindestens zwischen dem Aufnahmeniveau und einem Ausrückniveau, das tiefer ist als das Zuführungsniveau, in einem Ausgabehub (B') bewegbar zu sein, wobei die Stützkomponenten (330, 72) entlang der Transportrichtung (T) mit Bezug auf die Transportkomponenten (52) des Zuführungspfades (5) versetzt sind;
(d). Betätigen der Aufnahmevorrichtung (3, 300) gemäß einem Annäherungshub (A) an den Zuführungspfad (5), um den einen oder die mehreren Aufnahmearme (33, 330), die über den Transportkomponenten (52) ausgerichtet sind, vorzubereiten;
(e). Anordnen der Stützkomponenten (330, 72) der Übergabeanordnung (7) auf dem Aufnahmeniveau, um die Elemente (2), die auf der Aufnahmeebene (31) angeordnet sind, zu stützen;
(f). Betätigen der Übergabeanordnung (7, 300) gemäß dem Abladehub (B') vom Aufnahmeniveau zum Ausrückniveau, um die Elemente (2) auf der Zuführungsebene (51) des Zuführungspfades (5) auf korrekte Weise freizugeben.

2. Verfahren nach Anspruch 1, **dadurch gekennzeichnet, dass** der Schritt des (e). Betätigens der Übergabeanordnung (7) durch Eingreifen in beabstandete Abschnitte der Elemente (2) mit den Stützkomponenten (330, 72) erfolgt.

3. Verfahren nach Anspruch 1 oder 2, **dadurch gekennzeichnet, dass** der Abladehub (B') ein im Wesentlichen vertikaler Umsetzhub ist.

4. Verfahren nach einem der vorhergehenden Ansprüche, **dadurch gekennzeichnet, dass** die Übergabeanordnung (7) in die Aufnahmevorrichtung (300) integriert ist, wobei sich die Aufnahmearme (330) mit den Stützkomponenten decken.

5. Verfahren nach einem der Ansprüche 1 bis 3, **dadurch gekennzeichnet, dass** dem Schritt des (f). Betreibens der Übergabeanordnung (7) zum Abladehub (B') die folgenden Schritte vorausgehen:
(e1). Betätigen der Übergabeanordnung (7) gemäß einem Aufladehub (B), bei dem die Stützkomponenten (72) vom Ausrückniveau, verglichen mit dem Aufnahmeniveau, auf ein erhöhtes Niveau gebracht werden, wobei die Stützkomponenten (72) entlang der Transportrichtung (T) zu den Aufnahmearmen (33) versetzt positioniert sind, um die Elemente (2) von den Aufnahmearmen (33) der Aufnahmevorrichtung (3) zu heben;
(e2). Betätigen der Aufnahmearme (33) in einem Hub (A') des Zurückziehens von den Stützkomponenten (72), um den Raum unter den Stützkomponenten (72), die auf dem erhöhten Niveau positioniert sind, freizugeben und es den Stützkomponenten (72) zu ermöglichen, den Ausgabehub (B') auszuführen.

6. Verfahren nach Anspruch 5, **dadurch gekennzeichnet, dass** der Hub (A') des Zurückziehens von den Stützkomponenten (72) mittels einer Umsetzbewegung der Aufnahmearme (33) entlang einer im Wesentlichen horizontalen Richtung erfolgt.

7. Verfahren zum korrekten Übergeben von länglichen Elementen, insbesondere Metallstäben, das die folgenden Schritte umfasst:
(a). Anordnen einer Aufnahmevorrichtung (3, 300), die quer zu einem Lager (4) bewegbar ist, zum Sammeln der Elemente (2) und die einen oder mehrere Aufnahmearme (33, 330) umfasst, die eine Aufnahmeebene (31) definieren, die auf einem Aufnahmeniveau positioniert ist, wobei die länglichen Elemente (2) stehend auf der Aufnahmeebene (31) angeordnet sind;
(b). Anordnen eines Zuführungspfads (5), der eine Vielzahl von Transportkomponenten (52) umfasst, die dazu ausgelegt sind, die länglichen Elemente (2) gestützt aufzunehmen und in eine Transportrichtung (T) entlang der Längsachse der Elemente (2) zu transportieren, wobei die Transportkomponenten (52) eine jeweilige Zuführungsebene (51) auf einem Zuführungsniveau definieren, das tiefer ist als das Aufnahmeniveau, wobei das Verfahren **dadurch gekennzeichnet ist, dass** es die weiteren folgenden Schritte umfasst
(c). Anordnen einer Übergabeanordnung (7), die mit der Aufnahmevorrichtung (3, 300) und mit dem Zuführungspfad (5) zusammenwirkt und eine Vielzahl von Stützkomponenten (330, 72) umfasst, die zusammenwirken, um eine Stützebene (71) für die Elemente (2) zu definieren, und dazu ausgelegt sind, mindestens zwischen dem Aufnahmeniveau und einem Ausrückniveau, das tiefer ist als das Zuführungsniveau, und/oder einem Zwischenniveau, auf dem eine Akkumulationszwischenebene (81) definiert ist, in einem Ausgabehub (B') bewegbar zu sein, wobei die Stützkomponenten (330, 72) entlang der Transportrichtung (T) mit Bezug auf die Transportkomponenten (52) des Zuführungspfades (5) und/oder auf zusätzliche Stützkomponenten (82), die über dem Zuführungspfad (5) angeordnet sind und die Akkumulationsebene (81) definieren, versetzt sind;
(d). Betätigen der Aufnahmevorrichtung (3, 300) gemäß einem Hub (A) des Annäherns an den Zuführungspfad (5), um den einen oder die mehreren Aufnahmearme (33, 330), die über den Transportkomponenten (52) ausgerichtet sind, anzuordnen, oder an die zusätzlichen Stützkomponenten (82);
(e). Anordnen der Stützkomponenten (330, 72) der Übergabeanordnung (7) auf dem Aufnahmeniveau, um die Elemente (2), die auf der Aufnahmeebene (31) angeordnet sind, zu stützen;
(f). Betätigen der Übergabeanordnung (7, 300) gemäß dem Abladehub (B') vom Aufnahmeniveau zum Ausrückniveau, um die Elemente (2) auf der Zuführungsebene (51) des Zuführungspfades (5) oder auf der Akkumulationsebene (81) auf korrekte Weise freizugeben.

8. Verfahren nach Anspruch 7, **dadurch gekennzeichnet, dass** es ferner den Schritt des Betätigens der zusätzlichen Stützkomponenten (82) in einem weiteren Hub des Abladens vom Zwischenniveau zum Zuführungsniveau, um die Elemente (2) die auf der Akkumulationsebene (81) freigegeben werden, dem Zuführungspfad (5) zu übergeben, umfasst.

9. Einrichtung zum korrekten Übergeben von länglichen Elementen, die eine Aufnahmevorrichtung (3), die einen oder mehrere Aufnahmearme (33, 330) umfasst, die eine Aufnahmeebene (31) definieren, die auf einem Aufnahmeniveau positioniert und dazu ausgelegt ist, die Elemente (2) aufzunehmen, einen Zuführungspfad (5), der eine Vielzahl von Transportkomponenten (52) umfasst, die dazu ausgelegt sind, die Elemente (2) gestützt aufzunehmen und in eine Transportrichtung (T) entlang der Längsachse der Elemente (2) zu transportieren, umfasst, wobei die Transportkomponenten (52) eine jeweilige Zuführungsebene (51) auf einem Zuführungsniveau definieren, das tiefer ist als das Aufnahmeniveau, wobei die Aufnahmevorrichtung (3) durch einen Hub (A) des Annäherns an den Zuführungspfad (5) bewegbar ist, um den einen oder die mehreren Aufnahmearme (33, 330) über den Stützkomponenten (52) auszurichten, **dadurch gekennzeichnet, dass** es eine Übergabeanordnung (7, 300), die mit der Aufnahmevorrichtung (3, 300) und mit dem Zuführungspfad (5) zusammenwirkt, und eine oder mehrere Stützkomponenten (330, 72) umfasst, die zusammenwirken, um eine Stützebene (71) für die Elemente (2) zu definieren, und dazu ausgelegt sind, mindestens zwischen dem Aufnahmeniveau und einem Ausrückniveau, das tiefer ist als das Zuführungsniveau, in einem Ausgabehub (B') bewegbar zu sein, wobei die eine oder die mehreren Stützkomponenten (330, 72) mit Bezug auf das Transportmittel (52) des Zuführungspfades (5) in der Beförderungsrichtung (T) versetzt sind, um die Elemente (2) auf der Zuführungsebene (51) des Zuführungspfades (5) nachdem Ausgabehub (B') freizugeben.

10. Einrichtung nach Anspruch 9, **dadurch gekennzeichnet, dass** der Zuführungspfad (5) durch Transportkomponenten (52), insbesondere Rollen, die gegenseitig beabstandet sind, definiert ist, wobei die eine oder die mehreren Stützkomponenten (72, 330) zwischen den Transportkomponenten (52) im Ausgabehub (B') zum Ausrückniveau hin einsetzbar sind.

11. Einrichtung nach Anspruch 10, **dadurch gekennzeichnet, dass** die Stützkomponenten (72) aus bewegbaren Armen bestehen, die entlang des Zuführungspfades (5) bewegbar montiert sind, um während des Abladehubs (B') in jeweilige distale Abschnitte der Elemente (2), die zu übergeben sind, einzurücken.

12. Einrichtung nach Anspruch 9, **dadurch gekennzeichnet, dass** die Übergabeanordnung (7) in die Aufnahmevorrichtung (300) integriert ist, wobei die eine oder die mehreren bewegbaren Stützkomponenten gemäß dem Abladehub (B') aus dem einen oder den mehreren Aufnahmearmen (330) bestehen.

13. Einrichtung zum korrekten Übergeben von länglichen Elementen, die eine Aufnahmevorrichtung (3), die einen oder mehrere Aufnahmearme (33, 330) umfasst, die eine Aufnahmeebene (31) definieren, die auf einem Aufnahmeniveau positioniert und dazu ausgelegt ist, die Elemente (2) aufzunehmen, einen Zuführungspfad (5), der eine Vielzahl von Transportkomponenten (52) umfasst, die dazu ausgelegt sind, die Elemente (2) gestützt aufzunehmen und in eine Transportrichtung (T) entlang der Längsachse der Elemente (2) zu transportieren, umfasst, wobei die Transportkomponenten (52) eine jeweilige Zuführungsebene (51) auf einem Zuführungsniveau definieren, das tiefer ist als das Aufnahmeniveau, wobei die Aufnahmevorrichtung (3) durch einen Hub (A) des Annäherns an den Zuführungspfad (5) bewegbar ist, **dadurch gekennzeichnet, dass** sie eine Übergabeanordnung (7, 300) umfasst, die mit der Aufnahmevorrichtung (3, 300), mit dem Zuführungspfad (5) und/oder mit einer Akkumulationsanordnung (8) zusammenwirkt, die eine Vielzahl von zusätzlichen Stützkomponenten (82) umfasst, die eine Akkumulationsebene (81) für die Elemente (2), die auf einem Zwischenniveau zwischen dem Aufnahmeniveau und dem Zuführungsniveau angeordnet ist, wobei die Übergabeanordnung (7) eine oder mehrere Stützkomponenten (330, 72), die zusammenwirken, um eine Stützebene (71) für die Elemente (2) zu definieren, umfasst, die dazu ausgelegt sind, mindestens zwischen dem Aufnahmeniveau und einem Ausrückniveau, das tiefer ist als das Zuführungsniveau und/oder das Zwischenniveau, in einem Ausgabehub (B') bewegbar zu sein, wobei die eine oder die mehreren Stützkomponenten (330, 72) mit Bezug auf die Transportkomponenten (52) des Zuführungspfades (5) und/oder auf die zusätzlichen Stützkomponenten (82) entlang der Transportrichtung (T) versetzt sind, um die Elemente (2) auf der Zuführungsebene (51) des Zuführungspfades (5) nach dem Abladehub (B') oder auf der Akkumulationsebene (81) freizugeben, wenn der eine oder die mehreren Aufnahmearme (33, 330) über den Stützkomponenten (52) nach dem Annäherungshub (A) ausgerichtet sind.

14. Einrichtung nach einem der Ansprüche 9 bis 13, **dadurch gekennzeichnet, dass** der Abladehub (B') ein im Wesentlichen vertikaler Umsetzhub ist.

## Revendications

1. Procédé de transfert ordonné d'éléments allongés, en particulier de barres métalliques, comprenant les étapes consistant à :
(a). disposer un dispositif de réception (3, 300), mobile transversalement à un magasin (4) pour collecter lesdits éléments (2) et comprenant un ou plusieurs bras de réception (33, 330) définissant un plan de réception (31) positionné à un niveau de réception, lesdits éléments allongés (2) étant disposés debout sur ledit plan de réception (31) ;
(b). agencer un trajet d'alimentation (5) comprenant une pluralité d'éléments de transport (52), configurés pour recevoir en support et transporter lesdits éléments allongés (2) dans une direction de transport (T) le long de l'axe longitudinal desdits éléments (2), lesdits éléments de transport (52) définissant un plan d'alimentation respectif (51) à un niveau d'alimentation inférieur audit niveau de réception, ledit procédé étant **caractérisé en ce qu'il** comprend les étapes supplémentaires consistant à :
(c). disposer un ensemble de transfert (7) coopérant avec ledit dispositif de réception (3, 300) et avec ledit trajet d'alimentation (5), comprenant une pluralité d'éléments de support (330, 72) coopérant pour définir un plan de support (71) pour lesdits éléments (2), configuré pour être mobile dans une course de déchargement (B') au moins entre ledit niveau de réception et un niveau de désengagement, inférieur audit niveau d'alimentation, lesdits éléments de support (330, 72) étant décalés le long de ladite direction de transport (T) par rapport auxdits éléments de transport (52) dudit trajet d'alimentation (5) ;
(d). actionner ledit dispositif de réception (3, 300) selon une course d'approche (A) vers ledit trajet d'alimentation (5) afin de préparer lesdits un ou plusieurs bras de réception (33, 330) alignés au-dessus desdits éléments de transport (52) ;
(e). disposer lesdits éléments de support (330, 72) dudit ensemble de transfert (7) dans ledit niveau de réception, de manière à supporter lesdits éléments (2) disposés sur ledit plan de réception (31) ;
(f). actionner ledit ensemble de transfert (7, 300) en fonction de ladite course de déchargement (B') dudit niveau de réception audit niveau de désengagement, pour libérer de manière ordonnée lesdits éléments (2) sur ledit plan d'alimentation (51) dudit trajet d'alimentation (5).

2. Procédé selon la revendication 1, **caractérisé en ce que** ladite étape (e). d'actionnement dudit ensemble de transfert (7) s'effectue en interceptant des parties espacées desdits éléments (2) au moyen desdits éléments de support (330, 72).

3. Procédé selon la revendication 1 ou 2, **caractérisé en ce que** ladite course de déchargement (B') est une course de translation sensiblement verticale.

4. Procédé selon l'une des revendications précédentes, **caractérisé en ce que** ledit ensemble de transfert (7) est intégré dans ledit dispositif de réception (300), lesdits bras de réception (330) coïncidant avec lesdits éléments de support.

5. Procédé selon l'une des revendications 1 à 3, **caractérisé en ce que** ladite étape (f). de fonctionnement dudit ensemble de transfert (7) selon ladite course de déchargement (B') est précédée par les étapes de :
(e1). actionnement dudit ensemble de transfert (7) selon une course de chargement (B), apport desdits éléments de support (72) dudit niveau de désengagement à un niveau élevé par rapport audit niveau de réception, lesdits éléments de support (72) étant positionnés décalés par rapport auxdits bras de réception (33) le long de ladite direction de transport (T), de manière à soulever lesdits éléments (2) desdits bras de réception (33) dudit dispositif de réception (3) ;
(e2). actionnement desdits bras de réception (33) dans une course (A') de retrait desdits éléments de support (72), de manière à libérer l'espace au-dessous desdits éléments de support (72) positionnés audit niveau élevé et à permettre auxdits éléments de support (72) d'effectuer ladite course de déchargement (B').

6. Procédé selon la revendication 5, **caractérisé en ce que** ladite course (A') de retrait desdits éléments de support (72) s'effectue par un mouvement de translation desdits bras de réception (33) le long d'une direction sensiblement horizontale.

7. Procédé de transfert ordonné d'éléments allongés, en particulier de barres métalliques, comprenant les étapes consistant à :
(a). disposer un dispositif de réception (3, 300), mobile transversalement à un magasin (4) pour collecter lesdits éléments (2) et comprenant un ou plusieurs bras de réception (33, 330) définissant un plan de réception (31) positionné à un niveau de réception, lesdits éléments allongés (2) étant disposés debout sur ledit plan de réception (31) ;
(b). disposer un trajet d'alimentation (5) comprenant une pluralité d'éléments de transport (52), configurés pour recevoir en support et transporter lesdits éléments allongés (2) dans une direction de transport (T) le long de l'axe longitudinal desdits éléments (2), lesdits éléments de transport (52) définissant un plan d'alimentation respectif (51) à un niveau d'alimentation inférieur audit niveau de réception, ledit procédé étant **caractérisé en ce qu'il** comprend les étapes supplémentaires consistant à
(c). disposer un ensemble de transfert (7) coopérant avec ledit dispositif de réception (3, 300) et avec ledit trajet d'alimentation (5), comprenant une pluralité d'éléments de support (330, 72) coopérant pour définir un plan de support (71) pour lesdits éléments (2), configuré pour être mobile dans une course de déchargement (B') au moins entre ledit niveau de réception, et un niveau de désengagement, inférieur audit niveau d'alimentation et/ou à un niveau intermédiaire auquel un plan d'accumulation intermédiaire (81) est défini, lesdits éléments de support (330, 72) étant décalés le long de ladite direction de transport (T) par rapport auxdits éléments de transport (52) dudit trajet d'alimentation (5) et/ou aux éléments de support auxiliaires (82) disposés au-dessus dudit trajet d'alimentation (5) et définissant ledit plan d'accumulation (81);
(d). actionner ledit dispositif de réception (3, 300) selon une course (A) s'approchant dudit trajet d'alimentation (5) pour agencer lesdits un ou plusieurs bras de réception (33, 330) alignés au-dessus desdits éléments de transport (52) et/ou desdits éléments de support auxiliaires (82) ;
(e). disposer lesdits éléments de support (330, 72) dudit ensemble de transfert (7) dans ledit niveau de réception, de manière à supporter lesdits éléments (2) disposés sur ledit plan de réception (31) ;
(f). actionner ledit ensemble de transfert (7, 300) en fonction de ladite course de déchargement (B') dudit niveau de réception audit niveau de désengagement, pour libérer de manière ordonnée lesdits éléments (2) sur ledit plan d'alimentation (51) dudit trajet d'alimentation (5) ou sur ledit plan d'accumulation (81).

8. Procédé selon la revendication 7, **caractérisé en ce qu'**il comprend l'étape supplémentaire consistant à actionner lesdits éléments de support auxiliaires (82) dans une course supplémentaire de déchargement dudit niveau intermédiaire audit niveau d'alimentation, pour transférer lesdits éléments (2) libérés sur ledit plan d'accumulation (81) audit trajet d'alimentation (5).

9. Appareil de transfert ordonné d'éléments allongés, comprenant un dispositif de réception (3) comprenant un ou plusieurs bras de réception (33, 330) définissant un plan de réception (31) positionné à un niveau de réception et configuré pour recevoir lesdits éléments (2), un trajet d'alimentation (5) comprenant une pluralité d'éléments de transport (52), configurés pour recevoir en support et transporter lesdits éléments (2) dans une direction de transport (T) le long de l'axe longitudinal desdits éléments (2), lesdits éléments de transport (52) définissant un plan d'alimentation respectif (51) à un niveau d'alimentation inférieur audit niveau de réception, ledit dispositif de réception (3) étant mobile par une course (A) d'approche dudit trajet d'alimentation (5) pour aligner lesdits un ou plusieurs bras de réception (33, 330) au-dessus desdits éléments de support (52), **caractérisé en ce qu'**il comprend un ensemble de transfert (7, 300) coopérant avec ledit dispositif de réception (3, 300) et avec ledit trajet d'alimentation (5), comprenant un ou plusieurs éléments de support (330, 72) coopérant pour définir un plan de support (71) pour lesdits éléments (2), configuré pour être mobile dans une course de déchargement (B') au moins entre ledit niveau de réception et un niveau de désengagement, inférieur audit niveau d'alimentation, lesdits un ou plusieurs éléments de support (330, 72) étant décalés le long de ladite direction de transport (T) par rapport auxdits moyens de transport (52) dudit trajet d'alimentation (5), pour libérer lesdits éléments (2) sur ledit plan d'alimentation (51) dudit trajet d'alimentation (5) après ladite course de déchargement (B').

10. Appareil selon la revendication 9, **caractérisé en ce que** ledit trajet d'alimentation (5) est défini par des éléments de transport (52), en particulier des rouleaux, espacés les uns des autres, lesdits un ou plusieurs éléments de support (72, 330) pouvant être interposés entre lesdits éléments de transport (52) dans ladite course de déchargement (B') vers ledit niveau de désengagement.

11. Appareil selon la revendication 10, **caractérisé en ce que** lesdits éléments de support (72) sont réalisés au moyen de bras mobiles, montés mobiles le long dudit trajet d'alimentation (5), de manière à engager, pendant ladite course de déchargement (B'), des parties distales respectives desdits éléments (2) à transférer.

12. Appareil selon la revendication 9, **caractérisé en ce que** ledit ensemble de transfert (7) est intégré audit dispositif de réception (300), lesdits un ou plusieurs éléments de support mobiles selon ladite course de déchargement (B') étant réalisés par lesdits un ou plusieurs bras de réception (330).

13. Appareil de transfert ordonné d'éléments allongés, comprenant un dispositif de réception (3) comprenant un ou plusieurs bras de réception (33, 330) définissant un plan de réception (31) positionné à un niveau de réception et configuré pour recevoir lesdits éléments (2), un trajet d'alimentation (5) comprenant une pluralité d'éléments de transport (52), configurés pour recevoir en support et transporter lesdits éléments (2) dans une direction de transport (T) le long de l'axe longitudinal desdits éléments (2), lesdits éléments de transport (52) définissant un plan d'alimentation respectif (51) à un niveau d'alimentation inférieur audit niveau de réception, ledit dispositif de réception (3) étant mobile par une course (A) d'approche dudit trajet d'alimentation (5), **caractérisé en ce qu'**il comprend un ensemble de transfert (7, 300) coopérant avec ledit dispositif de réception (3, 300), avec ledit trajet d'alimentation (5) et/ou avec un ensemble d'accumulation (8) comprenant une pluralité d'éléments de support auxiliaires (82) définissant un plan d'accumulation (81) pour lesdits éléments (2), disposés à un niveau intermédiaire entre ledit niveau de réception et ledit niveau d'alimentation, ledit ensemble de transfert (7) comprenant un ou plusieurs éléments de support (330, 72) coopérant pour définir un plan de support (71) pour lesdits éléments (2), configuré pour être mobile dans une course de déchargement (B') au moins entre ledit niveau de réception, et un niveau de désengagement, inférieur audit niveau d'alimentation et/ou audit niveau intermédiaire, lesdits un ou plusieurs éléments de support (330, 72) étant décalés le long de ladite direction de transport (T) par rapport auxdits éléments de transport (52) dudit trajet d'alimentation (5) et/ou auxdits éléments de support auxiliaires (82), pour libérer lesdits éléments (2) sur ledit plan d'alimentation (51) dudit trajet d'alimentation (5) après ladite course de déchargement (B') ou sur ledit plan d'accumulation (81), lorsque lesdits un ou plusieurs bras de réception (33, 330) sont alignés au-dessus desdits éléments de support (52) après ladite course d'approche (A).

14. Dispositif selon l'une des revendications 9 à 13, **caractérisé en ce que** ladite course de déchargement (B') est une course de translation sensiblement verticale.
